Europäisches Patentamt

European Patent Office

Office européen des brevets

(19)

(11) Publication number: **0 068 316**
A2

(12) **EUROPEAN PATENT APPLICATION**

(21) Application number: **82105292.5**

(22) Date of filing: **16.06.82**

(51) Int. Cl.³: **B 01 D 23/20**

(30) Priority: **17.06.81 ZA 814146**

(43) Date of publication of application: **05.01.83**
Bulletin **83/1**

(84) Designated Contracting States: **AT BE CH DE FR GB IT LI LU NL SE**

(71) Applicant: **BLUE CIRCLE PROJECTS (PROPRIETARY) LIMITED, Wrench Road, Isando Transvaal Province (ZA)**

(72) Inventor: **Moore, Richard Pierpont, corner Blackreef and Moore Streets, Germiston Transvaal Province (ZA)**

(74) Representative: **Patentanwäite Beetz sen. - Beetz jun. Timpe - Siegfried - Schmitt-Fumian, Steinsdorfstrasse 10, D-8000 München 22 (DE)**

(54) **Filter distribution nozzle.**

(57) A filter distribution nozzle (1) having a chamber portion defined at least in part, by a perforated wall (2) and a tubular spigot (4) extending away from the chamber and defining the outlet therefrom. The spigot (4) is made of resiliently deformable material and has a formation (8) on its outer surface for cooperation with a coacting part (5) of a hole in which the spigot is to be located in use. The spigot is generally provided with a plurality of angularly spaced, longitudinally extending slots (9) through its wall in the vicinity of the formation to allow for radial contraction and this passage of the formation through a hole of diameter roughly equal to that of the spigot.

ACTORUM AG

COMPLETE DOCUMENT

-2-

THIS INVENTION relates to distribution nozzles for use in filters and, more particularly, nozzles of the type which are incorporated in a wall or floor of a filter which supports particulate filter medium.

The distribution nozzles act as a sieve to retain the particulate filter medium whilst allowing the filtrate to pass therethrough.

In currently available filter assemblies the nozzles are all provided with a screw-threaded tubular spigot which co-operates with a correspondingly screw-threaded hole through the wall or floor of the filter. In some cases the screw-threaded hole is provided in an insert cast, in situ, in to the floor or wall and, in other cases, the screw-threaded hole is formed in a fabricated or cast part or in tubular collection memebers.

/....

-3-

Clearly the screw-threading operation is costly which, in turn, leads to an increase in cost of the filter assemblies. Also, there is the operation of actually securing each screw-threaded tubular spigot of the distribution nozzles in position for operation.

It is the object of this invention to provide distribution nozzles which obviate an appreciable amount of the above described operations in their being installed in apertures through the wall or floor.

In this Specification the term "resilient" is intended to include within its scope both materials which are inherently elastic and also those which have simply a plastic memory and which return substantially to their original shape over a period of time.

In accordance with this invention there is provided a filter distribution nozzle comprising a perforated head adapted to retain particulate filter medium thereon and forming one wall of an interior nozzle chamber, a tubular spigot communicating with the interior of the chamber, and defining a passage

/...

-4-

communicating therewith, the spigot having on the outer surface thereof a formation for co-operation with the surface edge or complimentary formation in a hole, the distribution nozzle being characterised in that the spigot is made from a resiliently deformable material and is radially inwardly deformable at least in the region of the formation.

Further features of the invention provide for the spigot to be integral with a base portion of said nozzle chamber; for the spigot to extend in a direction away from the perforated head; for the spigot to have a plurality of angularly spaced longitudinally extending slots through the wall thereof in the vacinity of the formation; and for the perforated wall to be part-spherical in shape.

In one type of distribution nozzle according to the invention the tubular spigot has a plain outer surface apart from a circumferentially extending ridge located at a distance from the under-surface of the nozzle substantially equal to the thickness of the floor or insert in to which it is to be installed. A plurality of radially spaced slots are

/....

-5-

provided spanning the region of the spigot including the ridge so that, in effect, the circumference of the ridge can be contracted to pass the ridge through a hole having a diameter roughly equal to that of the outer surface of the spigot.

In such a case the hole with which the spigot co-operates could be tapered with the operatively lower end being the smaller diameter and being adapted to co-operate with the ridge.

In another embodiment of the invention the spigot is provided with a bevel at its end adapted to enter a hole and the side walls are necked slightly to provide a maximum diameter at the free end thereof. This spigot is adapted to co-operate with the adjacent end of a hole through which it extends and angularly spaced longitudinal slots are provided from the free end of the spigot for a predetermined portion of the length thereof.

Two embodiments of the invention will now be described with reference to the accompanying drawings in order that the invention may be more fully understood. In the drawings:-

/....

-6-

Fig. 1    is an elevation of one embodiment of the invention in the operative position,

Fig. 2    illustrates an alternative embodiment of the invention in the uninstalled condition, and,

Fig. 3    illustrates the embodiment of Fig. 2 in the installed condition.


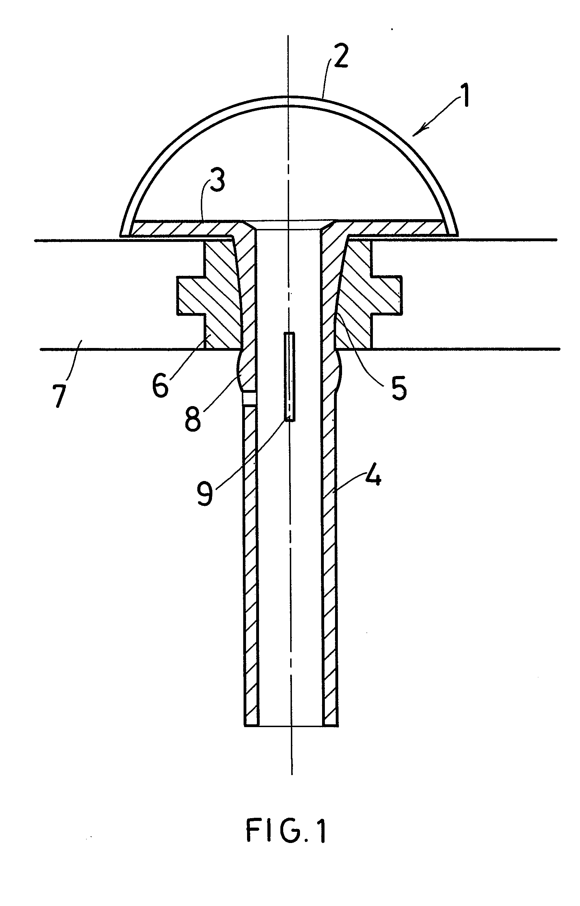

As illustrated in Fig. 1 a distribution nozzle 1 for a filter has a part-spherical perforated wall 2 located uppermost in the operative position, and this wall is attached to the periphery of a flange 3 carried at one end of a tubular spigot 4.  The outer diameter of the spigot is, for the major part of its length, substantially equal to the minimum diameter of a tapered hole 5 through an insert 6 in a concrete floor or wall 7.


The outer surface of the spigot has a low profiled ridge 8 thereon which extends in the circumferential direction and is spaced from the adjacent surface of the flange 3 by a distance substantially

/....

-7-

equal to the thickness of the wall 7.

Longitudinally extending slots 9 are provided at angularly spaced locations around the spigot in the vacinity of the ridge 8. These slots are designed to enable radial movement of the spigot to take place inwardly to enable the ridge to pass through the smallest region of the hole adjacent the lower surface of the wall.

The spigot and flange are conveniently made integral with each other and the part-spherical wall 2 having the perforations can be attached thereto afterwards. The spigot and flange are conveniently made by an injection moulding process from a suitably resilient thermo-plastic material.

It will be understood that in order to install distribution nozzles as above described they need only be urged such that the spigot passes through the hole and they will then be retained in position by the ridge engaging the inner edge of the hole.

/.....

It will be understood that the perforated wall could be of any suitable shape or configuration and, indeed, could define part of a different form of distribution nozzle.

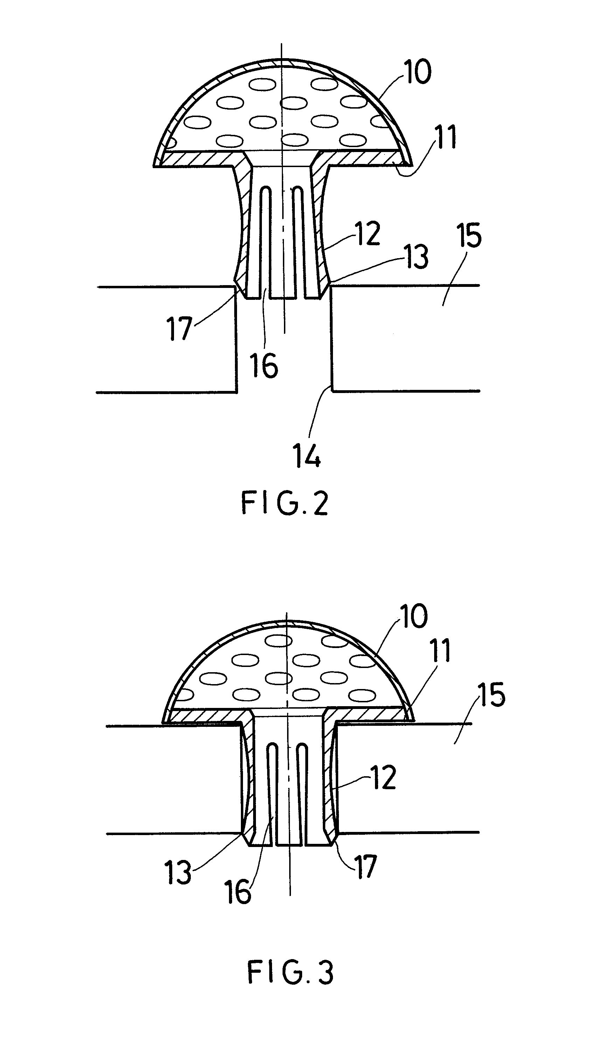

Refering now to Figs. 2 and 3 there is illustrated a similar perforated wall 10 secured to a flange 11 made integral with a tubular spigot 12. In this case the tubular spigot is substantially shorter than that described above andhas an outer surface which is contoured to provide a ridge of maximum outer diameter immediately adjacent its free end and at a location calculated such that the ridge will in fact locate itself relative to the hole 14 through the floor 15 to inhibit withdrawal thereof. Slots 16 extend inwardly from the free end of the spigot to enable the necessary radial movement of the portions of the spigot to take place in order to install it. Also, a bevelled end 17 is provided such that the slots will automatically tend to close when the spigot is introduced into a hole of the correct size.

As shown most clearly in Fig. 3 the slots are,

/....

in fact, partially closed at their free end in the installed condition thereby holding the material from which the spigot is made under stress.

Many variations may be made to the above described embodiments of the invention without departing from the scope hereof. In particular the general shape and configuration of the spigot can be changed as required as can the shape and configuration of the perforated wall. Also, the perforation in the nozzle head could assume any suitable shape such as slots, or holes of any peripheral shape. The circumferential ridge may be replaced by a protruberance defining the formation.

/....

Patent Claims

1. A filter distribution nozzle comprising a perforated head adapted to retain particulate filter medium thereon and forming one wall of an interior nozzle chamber, a tubular spigot communicating with the interior of the chamber, and defining a passage communicating therewith, the spigot having on the outer surface thereof a formation for cooperation with the surface edge or complementary formation in a hole, the distribution nozzle being characterised in that the spigot (4; 12) is made from a resiliently deformable material at least in the region of the formation (8; 13).

2. A filter distribution nozzle as claimed in claim 1 in which the spigot (4; 12) is integral with a base portion of said chamber.

3. A filter distribution nozzle as claimed in either of the preceding claims in which the spigot (4; 12) extends in a direction away from the perforated wall.

4. A filter distribution nozzle as claimed in any one of the preceding claims in which the spigot has a plurality of angularly spaced, longitudinally extending slots (9; 16) through the wall thereof in the vicinity of the formation (8; 13).

5. A filter distribution nozzle as claimed in any one of the preceding claims in which the formation is a circumferentially extending ridge (8; 13).

6. A filter distribution nozzle as claimed in any one of claims 1 to 4 in which the formation is a circumferentially extending ridge (13) defined at an end of an inwardly necked portion of the spigot.

7. A filter distribution nozzle as claimed in any one of the preceding claims in which at least the spigot (4) and part (3) integral therewith are made of injection moulded thermoplastic material.

8. A filter distribution nozzle as claimed in any one of the preceding claims in which the part of the spigot (4; 12) adapted to be located in a hole (5; 14) is tapered complementarily to the hole (5; 14) with the larger diameter adjacent to the head.

9. A filter distribution nozzle substantially as herein described and exemplified with reference to either Fig. 1 or Figs. 2 and 3 of the accompanying drawings.

FIG.1

FIG.2

FIG.3